# EUROPÄISCHE PATENTANMELDUNG

(11) **EP 3 162 629 A1**
(43) Veröffentlichungstag der Anmeldung: **03.05.2017**
(21) Anmeldenummer: 16194371.7
(22) Anmeldetag: 18.10.2016
(51) Int. Cl.: B60P 3/035, B60P 7/12, B61D 45/00

(54) **VORRICHTUNG ZUM FESTLEGEN EINES LADEGUTS**

(30) Priorität: 02.11.2015 DE 102015221398
(71) Anmelder: DB Fahrzeuginstandhaltung GmbH, 60326 Frankfurt (DE)
(72) Erfinder: Kühl, Thorsten, 65719 Hofheim (DE)
(74) Vertreter: Zinken-Sommer, Rainer

(57) **Zusammenfassung**

Die Erfindung betrifft eine Vorrichtung zum Festlegen eines Ladegutes auf einer Ladefläche, umfassend mindestens einen ersten (3) und einen zweiten (4) Festlegearm, welcher jeweils aus einer ersten, das Ladegut nicht berührenden freien Position in eine zweite, das Ladegut gegen eine Lageveränderung sichernde Position verstellbar ist, sowie eine Antriebsvorrichtung zur Durchführung der Verstellbewegung jedes Festlegearmes zwischen der freien und der sichernden Position. Diese Vorrichtung soll eine einfache und schnelle Bedienung zum sichern des Ladeguts dienen. Dies wird dadurch erreicht, dass die Antriebsvorrichtung zusätzlich über eine Antriebswelle (5) (6) antreibbare Differentialgetriebe aufweist, dessen Abtriebswellen mit jeweils einem Festlegearm mechanisch gekoppelt sind, wobei eine Drehbewegung der Antreibswelle in eine Verstellbewegung der beiden Festlegearme umgesetzt wird.

## Beschreibung

Vorrichtung zum Festlegen eines Ladegutes auf einer Ladefläche, umfassend mindestens einen ersten und einen zweiten Festlegearm, welcher jeweils aus einer ersten, das Ladegut nicht berührenden freien Position in eine zweite, das Ladegut gegen eine Lageveränderung sichernde Position verstellbar ist, sowie eine Antriebsvorrichtung zur Durchführung der Verstellbewegung jedes Festlegearmes zwischen der freien und der sichernden Position.

Es sind spezielle Eisenbahngüterwagen zum Transport von Coils bekannt. Die Transportfläche ist in Wagenlängsrichtung wellenförmig ausgebildet. Die so entstehenden einzelnen Mulden sind dabei etwa V-förmig und in Wagenquerachse verlaufend ausgebildet. Die Coils werden in diese Mulden mit gleichgerichteter Achse gelagert und über Festlegearme gegen eine Verschiebung in Fahrzeuglängsrichtung gesichert. Diese Festlegearme sind einseitig bedienbar. Sie werden links und rechts an ein Führungsrohr eingehackt. Das Ladegut wird mit zwei Festlegearmen links wie rechts fixiert. Die Festlegearme sind grob über einen Kamm und fein über eine Spindel verstellbar.

Es sind bereits Transportsicherungen für Coiltransportwagen beispielsweise aus der DE3514975C2 bekannt. Um ein Coil in axialer Richtung abzustützen und damit gegen Bewegungen in Fahrzeug-Längsrichtung oder gegen Umkippen zu sichern, werden zwei Steckschuhe mit je zwei Abstürzstreben angewendet.

Durch die Patentschrift DE2429715 ist bekannt, dass ein seitliches Verschieben dadurch verhindert wird, dass im Wagenboden versenkbare, stufenförmig ansteigende Raster, Coils unterschiedlicher Breite schützen. Die Coils werden dabei beim Beladen des Wagens auf die Raster aufgelegt. Diese werden gegen Federdruck in den Wagenboden versenkt, wobei sich dann die Coils gegen die nächste Stufe des Rasters seitlich anlegen.

Bei dieser Methode der Sicherung ist es notwendig, dass der Bediener für die Grobeinstellung auf den Wagen klettern, die Arme aus der Kammverriegelung heben und an das Coil anlegen muss. Anschließend müssen je nach Ausführung die Festlegearme fein von jeder Seite durch eine Spindel justiert werden.
Bei solchen handbetätigten Dreh-Verriegelungen hängt die Transportsicherheit wesentlich von der Sorgfalt des Bedienpersonals ab, das sämtliche Verriegelungen vor Fahrtbeginn einzeln in Verriegelungsstellung bringen und vor dem Abladen auch wieder lösen muss. Dies ist sehr zeitaufwendig. Außerdem können durch unsachgemäße Bedienung Gefahrenquellen hervorgerufen werden.

Aufgabe der Erfindung ist es, die Antriebsvorrichtung derart auszubilden, dass der Verlader das Fahrzeug nicht besteigen muss und ein ranfahren der Festlegearme von einer Seite des Transportfahrzeugs möglich ist. Ferner sollen der Arbeitsaufwand auf ein Minimum reduziert und die Gefahrenquellen vermieden werden.

Erfindungsgemäß wird diese Aufgabe durch die im Anspruch 1 aufgeführten Merkmale gelöst. Weitere vorteilhafte Ausgestaltungen der Erfindung sind in den Unteransprüchen dargestellt.

Die erfindungsgemäße Antriebsvorrichtung ermöglicht eine schnelle und einfache Sicherung der Coils. Erfindungsgemäß wird die Bedienung vollständig von einer Seite des Waggons durchgeführt. Durch ein Handrad (Powertool, Drehschrauber Akku/Luft) werden die gegenüberliegenden Festlegearme gleichzeitig bis zur Anlage an die Coils bewegt. Liegen die Coils in den Mulden nicht exakt in der Mitte, wird durch ein Differenzialgetriebe der sich ergebende unterschiedliche Verfahrweg bis zum Anliegen beider Coilfestlegearme ausgeglichen.
Erfindungsgemäß erfolgt die Bedienung der Coil Festlegeeinrichtung von einer Wagenseite aus. An der Stirnseite des Muldendoms befinden sich ein Handrad sowie ein Umschalthebel. Der Umschalthebel dient zur jeweiligen Wahl der Antriebsseite der benachbarten Mulde. In der Mittelstellung des Antriebshebels werden alle Spindeln blockiert. Die Festlegung ist erforderlich, da die Spindeln wegen einer höheren Verstellgeschwindigkeit bzw. größere Steigung nicht selbsthemmend sind. Ein Umstecken des Handrads auf die benachbarte Spindel entfällt. Die äußere Spindellagerungen, die Lagerung der Antriebswelle (Handrad) und die Lagerung des Verstellgestänges (Umschalthebel) erfolgt in einem Gehäuse.

Erfindungsgemäß sind die Festlegearme mechanisch mit der Abtriebswelle an einen Mitnehmer gekoppelt. Der Mitnehmer ist so ausgeführt, dass er über einen Spindeltrieb mit der Abtriebswelle verbunden ist. Der Vorteil dieser Ausführung ist das im Falle eines Defektes am Getriebe die Festlegearme von oben gelöst werden können.
Das Differentialgetriebe wird so umgesetzt das eine Drehbewegung der Antriebswelle in eine zueinander gegensinnige Drehrichtung der Abtriebswellen wirkt. Dadurch wird erreicht, dass die Bedienung von nur einer Seite des Fahrzeugs erfolgt. Durch Drehen des Handrads bewegen sich so die gegenüberliegenden Festlegearme zueinander gegensinnig, bis sie am Ladegut anliegen. Erfindungsgemäß ist die Bedienung der Festlegearme von einer Seite notwendig, aber durch Einbau einer zusätzlichen Antriebswelle am Differentialgetriebe ist eine Bedienung der Festlegearme von beiden Seiten des Transportfahrzeugs möglich. Dabei ist jeder der Antriebswellen so ausgelegt dass sie während der Übertragung eines Drehmoments über die jeweilige andere Antriebswelle leer mitläuft.

Die zeichnerischen Darstellungen zeigen in
- Figur 1: eine einseitige Festlegeeinrichtung mit Wannenförmiger Aufnahme für Coils
- Figur 2: Getriebeeinheit was die äußere Spindellagerung, die Lagerung der Antriebswelle (Handrad), die Lagerung der Verstellgestänge (16) (Umschalthebel), die Führungsrohre der Coilfestlegearme (3, 4) und das Getriebe aufweist.
- Figur 3: den Muldendom (14) bestehend aus einem Wannenträger (18), der inneren Lagereinheit (17) und den äußeren Lagerwangen (19).

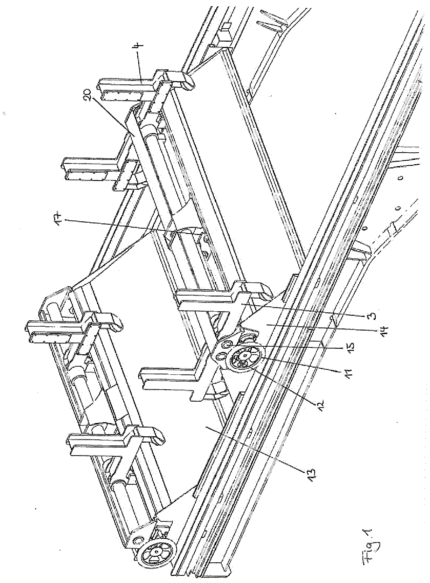

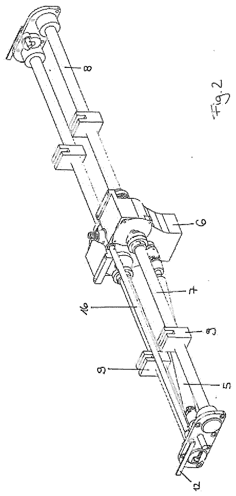

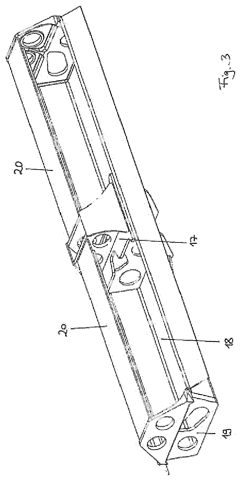

Die Erfindung ist nachstehend an einem Ausführungsbeispiel näher erläutert. Figur 1 zeigt die erfindungsgemäße Darstellung einer einseitigen Festlegeeinrichtung, die auf der Ladefläche (2) des Fahrzeugs eingebaut ist.
Der Muldendom (14) besteht aus einem Wannenträger (18), der inneren Lagereinheit (17) und den äußeren Lagerwangen (19). Der Wannenträger (18), wie in Figur 3, ist ein gekanteter Blechteil mit entsprechenden Ausschnitten in die die innere Lagereinheit (17) (Figur2) eingeschweißt wird. Die innere Lagereinheit (17) selbst besteht aus geschweißten geraden Blechteilen. In dieser werden das Getriebe und die Führungsrohre der Festlegearme befestigt. Die zwei äußeren Lagerwangen (19) nehmen die Führungsrohre (15), und die Lagerung der Spindel, den Antrieb und den Umschalthebel (12) auf.
Die Festlegearme (3, 4), für die rechte bzw. linke Mulde (13), sind beweglich an den Führungsrohren (15) montiert, so dass die Festlegearme (3, 4) nach oben geschwenkt und auf dem Führungsrohr (15) verschoben werden können.
An der Stirnseite des Muldendoms (14) befinden sich ein Handrad (11) sowie ein Umschalthebel (12). Der Umschalthebel (12) dient zur jeweiligen Wahl der Antriebsseite der benachbarten Mulden. Je nach Stellung des Umschalthebels (12) wird mit dem Handrad (11) der rechte bzw. linke Festlegearm (3, 4) bewegt. Durch Drehen des Handrads (11) werden die gegenüberliegenden Festlegearme (3, 4), für den rechten bzw. linken Muldendom (14), gleichzeitig bewegt, bis sie an dem Ladegut (1) anliegen. Sobald ein Festlegearm (3, 4) am Ladegut (1) anliegt, wird durch die eingeleitete Drehbewegung an der Antriebswelle (5, 10) die Abtriebswelle (7, 8) des noch nicht anliegenden Festlegearms (3, 4) so lange weiter gedreht, bis auch dieser fest am Ladegut (1) anliegt.

In Figur 2 ist die Getriebeeinheit, die in den Stahlbau des Muldendoms (14) eingebaut ist, ersichtlich. Über diese Getriebeeinheit werden die Festlegearme (3, 4) gesteuert. Die Getriebeeinheit besteht aus dem Getriebe, was ein Differentialgetriebe (6) sein kann oder auch ein Planeten- oder Stirnradgetriebe. Es ist pro Muldenseite eine Antriebswelle (5, 10) vorgesehen, die mittels Handrad (11) bedient werden. Diese Antriebswelle (5, 10) überträgt das Drehmoment auf ein Differentialgetriebe (6). Es ist hierbei frei wählbar, ob die Bedienung der gesamten Mechanik von der rechten oder der linken Antriebswelle (5, 10) ausgeht. Die in das Differentialgetriebe (6) eingeleitete Drehbewegung wird über die bekannte Grundfunktion eines Differentialgetriebes auf die Abtriebswellen (7, 8) übertragen. Die Abtriebswellen (7, 8) sind mit jeweils dem rechten bzw. linken Festlegearm (3, 4) mechanisch über das Koppelglied gekoppelt. Sobald ein Festlegearm (3, 4) fest an dem Ladegut (1) anliegt, wird durch die eingeleitete Drehbewegung an der Antriebswelle die Abtriebswelle des noch nicht angelegten Festlegearms (3, 4) so lange gedreht, bis auch dieser fest am Ladegut (1) anliegt.
Das in Figur 2 abgebildete Getriebe wird in die durch Figur 3 dargestellte Muldenwanne eingebaut. Durch die Gestaltung dieser Einheit als Gussteil, ist eine kompakte Bauform möglich.

Das obere Abdeckblech über den Führungen dient gleichzeitig als Abhebesicherung für die Festlegearme. Bei Demontage des Bleches können die Festlegearme aus der Mutter geschwenkt und auf dem Führungsrohr verschoben werden. Damit ist im Falle eines Defektes ein einfaches, schnelles Lösen möglich.

### Bezugszeichenliste:

- 1: Ladegut
- 2: Ladefläche
- 3: Erster Festlegearm
- 4: Zweiter Festlegearm
- 5: Erster Antriebswelle
- 6: Differentialgetriebe
- 7: Erster Abtriebswelle
- 8: Zweite Abtriebswelle
- 9: Mitnehmer
- 10: Zweite Antriebswelle
- 11: Handrad
- 12: Umschalthebel
- 13: Mulde
- 14: Muldendom
- 15: Führungsrohr
- 16: Verstellgestänge
- 17: Lagereinheit
- 18: Wannenträger
- 19: Lagerwanne
- 20: Oberer Abdeckblech

## Patentansprüche

1. Vorrichtung zum Festlegen eines Ladegutes (1) auf einer Ladefläche (2), umfassend
mindestens einen ersten (3) und einen zweiten (4) Festlegearm, welcher jeweils aus einer ersten, das Ladegut (1) nicht berührenden freien Position in eine zweite, das Ladegut (1) gegen eine Lageveränderung sichernde Position verstellbar ist,
sowie eine Antriebsvorrichtung zur Durchführung der Verstellbewegung jedes Festlegearmes (3, 4) zwischen der freien und der sichernden Position,
**dadurch gekennzeichnet, dass**
die Antriebsvorrichtung zusätzlich ein über eine Antriebswelle (5) antreibbares Differentialgetriebe (6) aufweist, dessen Abtriebswellen (7, 8) mit jeweils einem Festlegearm (3, 4) derart mechanisch gekoppelt sind, dass eine Drehbewegung der Antriebswelle (5) in eine Verstellbewegung der beiden Festlegearme (3, 4) umgesetzt wird.

2. Vorrichtung zum Festlegen eines Ladegutes (1) auf einer Ladefläche (2) nach Patentanspruch 1, **dadurch gekennzeichnet, dass** die mechanische Kopplung eines Festlegearmes (3, 4) mit der Abtriebswelle (7, 8) als Mitnehmer (9) ausgeführt ist, welcher über einen Spindeltrieb mit der Abtriebswelle (7, 8) verbunden ist.

3. Vorrichtung zum Festlegen eines Ladegutes (1) auf einer Ladefläche (2) nach Patentanspruch 1 oder 2, **dadurch gekennzeichnet, dass** das Differentialgetriebe (6) die Drehbewegung der Antriebswelle (5) in eine zueinander gleichsinnige Drehrichtung der Abtriebswellen (7, 8) umsetzt.

4. Vorrichtung zum Festlegen eines Ladegutes (1) auf einer Ladefläche (2) nach Patentanspruch 1 oder 2, **dadurch gekennzeichnet, dass** das Differentialgetriebe (6) die Drehbewegung der Antriebswelle (5) in eine zueinander gegensinnige Drehrichtung der Abtriebswellen (7, 8) umsetzt.

5. Vorrichtung zum Festlegen eines Ladegutes (1) auf einer Ladefläche (2) nach einem der Patentansprüche 1 bis 4, **dadurch gekennzeichnet, dass** das Differentialgetriebe (6) eine zusätzliche zweite Antriebswelle (10) aufweist, wobei jede der beiden Antriebswellen (5, 10) derart ausgelegt ist, dass sie während der Übertragung eines Drehmoments über die jeweils andere Antriebswelle leer mitläuft.

6. Transportfahrzeug, umfassend eine Vorrichtung zum Festlegen eines Ladegutes (1) auf einer Ladefläche (2) nach einem der Ansprüche 1 bis 5.
